# EUROPEAN PATENT SPECIFICATION

(11) **EP 3 237 140 B1**
(45) Date of publication and mention of the grant of the patent: **19.02.2020**
(21) Application number: 15797542.6
(22) Date of filing: 08.11.2015
(51) Int. Cl.: B23K 9/10

(54) **ENERGY STORAGE CADDY FOR WELDING SYSTEM**
ENERGIESPEICHERCADDY FÜR EIN SCHWEISSSYSTEM
CHARIOT DE STOCKAGE D'ÉNERGIE POUR SYSTÈME DE SOUDAGE

(30) Priority: 22.12.2014 US 201414579629
(43) Date of publication of application: 01.11.2017
(73) Proprietor: Illinois Tool Works Inc., Glenview, IL 60025 (US)
(72) Inventor: ALBRECHT, Bruce Patrick, Glenview, Illinois 60025 (US); BUNKER, Thomas Allen, Glenview, Illinois 60025 (US)
(74) Representative: Trinks, Ole
(86) International application number: PCT/US2015/059647
(87) International publication number: WO 2016/105675

(56) References cited:
- EP-A2- 1 535 691
- US-A1- 2011 114 608
- US-A1- 2014 263 238

## Description

### BACKGROUND

The present disclosure relates generally to welding systems and, more particularly, to energy storage devices for welding systems.

Welding is a process that has become increasingly ubiquitous in various industries and applications. As such, a variety of welding applications, such as construction and shipbuilding, may require welding devices that are portable and can easily be transported to a remote welding location. Accordingly, in some cases, it is often desirable for such welding devices to be operable as standalone units remote from a power grid or other utility power. Therefore, a variety of welding systems utilizing alternate power sources, such as batteries, have been developed. Furthermore, during a welding operation, some weld load demands may be relatively small (*e.g*., below 150 amps), and to meet such small load demands, the engine-generator unit is activated. However, activation of the engine-generator to meet such small load demands is often relatively inefficient. Additionally, during some welding operations, welding devices, whether powered by a power grid or an engine-generator, may have current output limitations. Accordingly, there exists a need for energy storage systems for use with welding systems to improve overall efficiency, output, and versatility of the welding system. EP1535691 discloses a portable welding-type apparatus with an interchangeable energy storage device.

### BRIEF DESCRIPTION

The invention is a welding system as defined in claim 1 and a method of providing power output to a welding system according to claim 10. Preferred embodiments are defined in the dependent claims. In one embodiment, a welding system includes a welder configured to supply a secondary power output, and an energy storage caddy coupled to a secondary side of the welder and configured to receive the secondary power output from the welder. The energy storage caddy includes an energy storage device configured to provide a supplemental power output and control circuitry configured to synchronize operation of the welder and the energy storage caddy based on at least one operating parameter of the welding system, wherein the energy storage caddy is configured to combine the secondary power output and the supplemental power output to produce a total power output, and output the total power output to a welding operation.

In another embodiment, a method includes providing a first power output with a welder, providing a second power output with an energy storage device of an energy storage caddy coupled to a secondary side of the welder, combining the first power output and the second power output with the energy storage caddy to produce a total power output, and supplying the total power output to a welding operation.

In a further embodiment, an energy storage caddy for a welding system includes an energy storage device configured to provide a supplemental power output, power electronics configured to condition the supplemental power output after the supplemental power output is discharged from the energy storage device, and control circuitry configured to regulate operation of the energy storage device, the power electronics, and a welding power source configured to provide a secondary power output to the energy storage caddy based on measured operating parameter of the energy storage caddy or a user input selection, wherein the energy storage caddy is configured to be coupled to a secondary side of the welding power source.

### DRAWINGS

These and other features, aspects, and advantages of the present disclosure will become better understood when the following detailed description is read with reference to the accompanying drawings in which like characters represent like parts throughout the drawings, wherein:
FIG. 1A is a graph illustrating voltage and current output of a welding system including a welder and an energy storage caddy, in accordance with aspects of the present disclosure;
FIG. 1B is a graph illustrating current output of a welding system including a welder and an energy storage caddy, in accordance with aspects of the present disclosure;
FIG. 1C is a graph illustrating current output of a welding system including a welder and an energy storage caddy, in accordance with aspects of the present disclosure;
FIG. 2 is a block diagram of an embodiment of a welding system including a welder and an energy storage caddy, in accordance with aspects of the present disclosure;
FIG. 3 is a block diagram of an embodiment of an energy storage caddy, in accordance with aspects of the present disclosure; and
FIG. 4 is a graph illustrating voltage and current output of a welding system including a welder and an energy storage caddy, in accordance with aspects of the present disclosure.

### DETAILED DESCRIPTION

Embodiments of the present disclosure are directed towards a welding system having a caddy type device with one or more energy storage devices running on a secondary connection of a welder or welding power supply. As discussed in detail below, the energy storage caddy may be used to improve efficiency, performance, and versatility of the welding system. For example, in certain embodiments, the energy storage caddy may be used to offset or add to an output power or current supplied by the welder, thereby increasing the overall power or current output of the welding system while reducing loading on a breaker of a primary power supply (e.g., a utility power supply). In embodiments having a welder with an engine-generator, the energy storage caddy may supplement and/or offset the current output of the welder thereby increasing the overall power or current output of the welding system while reducing fuel usage and/or noise produced by the welder. The energy storage caddy may enable additional improvements to the functionality of the welding system, as discussed below.

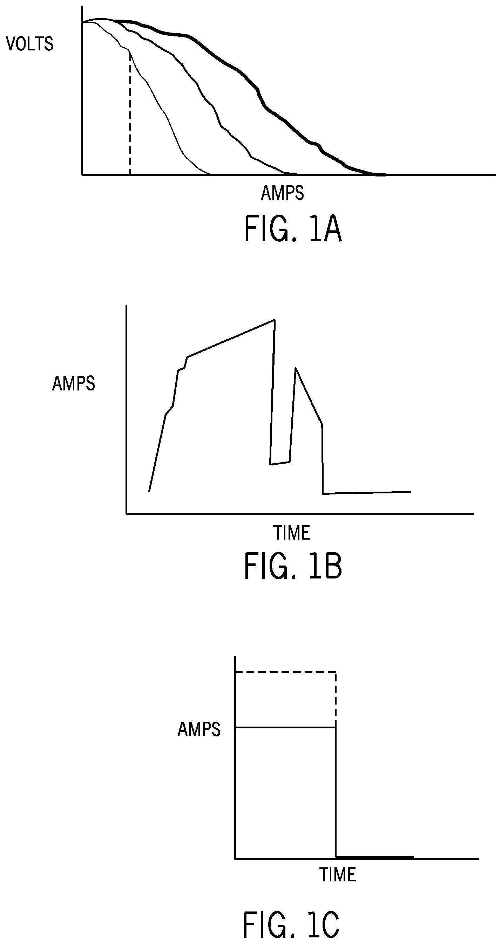

Turning now to the drawings, FIGS. 1A-1C illustrate various graphs of current and/or voltage output of a welding system having a welder and an energy storage caddy coupled to a secondary side of the welder. For example, FIG. 1A is a graph illustrating voltage and current output of a welding system, such as stick welding system, including a welder and an energy storage caddy. The dashed line in FIG. 1A represents offset amps from energy storage devices (e.g., batteries) in the energy storage caddy. The solid lines represent total output amps of the energy storage caddy and the welder. For example, the different solid lines may different total amp outputs for different resistance settings. The difference between the dashed line and the solid lines is the amp output from the welder as a result of a control command sent from the energy storage caddy to the welder. For example, the control command may be a signal on a weld cable or a control cable connecting the energy storage caddy to the welder. This control command can include commanding current, voltage, power/wattage, wave shape, portions of wave shapes, welder output on/off, engine on/off commands, or other information.

FIG. 1B is a graph of amperage output of a welding system, including a welder and an energy storage caddy. In certain embodiments, the energy storage caddy may provide a background voltage, current, wattage, or any combination thereof based on process and design nights. For example, the energy storage caddy may take over low amperage duty for regulated metal deposition processes. For further example, the energy storage caddy may provide additional amperage for short clearing. The energy storage caddy could also be used for plasma, multi-process welding, and induction. The energy storage caddy can be powered by a stick welding machine, and it can create command signals and add power to create a metal inert gas (MIG)-like arc or boost the voltage of a MIG machine to make it behave like a stick machine with caddy power added and command modifications. The energy storage caddy may also enable welders to behave like plasma machines and plasma machines to behave like welders. Simple stick machines can also become regulated metal deposition or pulse capable with the caddy.

The energy storage caddy may also be used to add high energy for short duration to arc star, clear shorts, or provide more peak power than the utility or engine based welder can provide on its own. For example, FIG. 1C illustrates an amperage output of a welding system with an energy storage caddy and without an energy storage caddy. Specifically, the solid line represents peak amperage magnitude of a welder without an energy storage caddy. The dashed line in FIG. 1C represents the peak amperage of a welding system having a welder combined with an energy storage caddy.

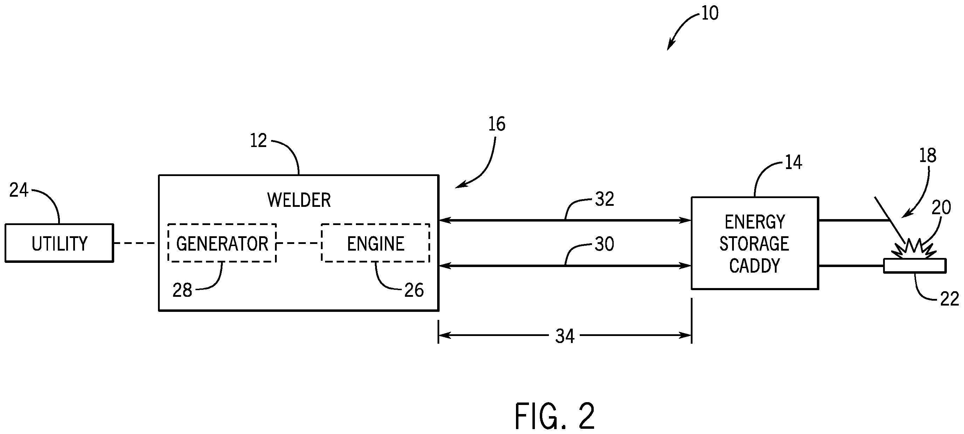

FIG. 2 is a block diagram of an embodiment of a welding system 10 having a welder 12 with an energy storage caddy 14 coupled to a secondary side 16 of the welder 12. The welder 12 and the energy storage caddy 14 of the welding system 10 are configured to generate and provide power for a welding operation. Specifically, the welder 12 and the energy storage caddy 14 supply power to a welding torch 18 to create a welding arc 20 between the welding torch 18 and a work piece 22, which may be coupled and grounded to the energy storage caddy 14.

In certain embodiments, the welder 12 may also be coupled to an external utility power, such as a utility 24 (e.g., a power grid). In other embodiments, the welder 12 may include an engine 26 configured to drive a generator 28 to produce secondary power. As mentioned above, the welder 12 and the energy storage caddy 14 of the welding system 10 are configured to generate and provide power for a welding operation. For example, the welder 12 and the energy storage caddy 14 may cooperatively generate and provide power for a welding operation. In other circumstances, the welder 12 and the energy storage caddy 14 may individually provide power for a welding operation. In other words, the welder 12 may generate and provide power for a welding operation without the energy storage caddy 14, and the energy storage caddy 14 may provide power (e.g., power stored within the energy storage caddy 14) without the welder 12. For example, in circumstances where the welder 12 individually provides power to a welding operation, power may be passed through the energy storage caddy 14 to the welding torch 18. While the energy storage caddy 14 is shown as a stand-alone unit of the welding system 10, in other embodiments the energy storage caddy 14 may be integrated with another component of the welding system 10. For example, the energy storage caddy 14 may be integrated with a welding wire feeder.

As shown, the welder 12 and the energy storage caddy 14 are coupled to one another. Specifically, the welder 12 and the energy storage caddy 14 are coupled together by a weld power cable 30 and a control cable 32. As will be appreciated, the weld power cable 30 is configured to transfer power from the welder 12 to the energy storage caddy 14. However, in certain embodiments, the weld power cable 30 may also be configured to transfer information and/or data between the welder and the energy storage caddy 14. The control cable 32 is configured to transfer data, control signals, and other information between the welder 12 and the energy storage caddy 14. As discussed in detail below, the energy storage caddy 14 may be configured to send control signals to regulate operation of the welder 12 based on operating conditions of the welding system 10, user input information or settings, feedback from the welder 12 and/or the energy storage caddy 14, or other parameters.

In the illustrated embodiment, the energy storage caddy 14 is positioned a distance 34 from the welder 12. For example, the welder 12 may be positioned proximate to a utility power (e.g., a utility plug outlet), and the energy storage caddy 14 may be positioned proximate a work site or other location for a welding operation. As will be appreciated, the distance 34 may impact a level of power received from the welder 12 by the energy storage caddy 14 (e.g., due to resistive losses along the length of the weld power cable 30). As discussed below, operation of the energy storage caddy 14 may be adjusted (e.g.., automatically) based on the distance 34 to account for such losses. Additionally, as the energy storage caddy 14 may be configured to send control signals through the control cable 32 to regulate operation of the welder 12, an operator may not have to travel the distance 34 from the work site back to the welder 12 to adjust various operating parameters of the welder 12. As a result, the energy storage caddy 14 may improve efficiency of welding operations with the welding system 10.

Although the illustrated embodiment of the welding system 10 shows one energy storage caddy 14 coupled to the secondary side 16 of the welder 12, other embodiments of the welding system 10 may include multiple energy storage caddies 14. Additional details of the components and functions of the energy storage caddy 14 are described in further detail below.

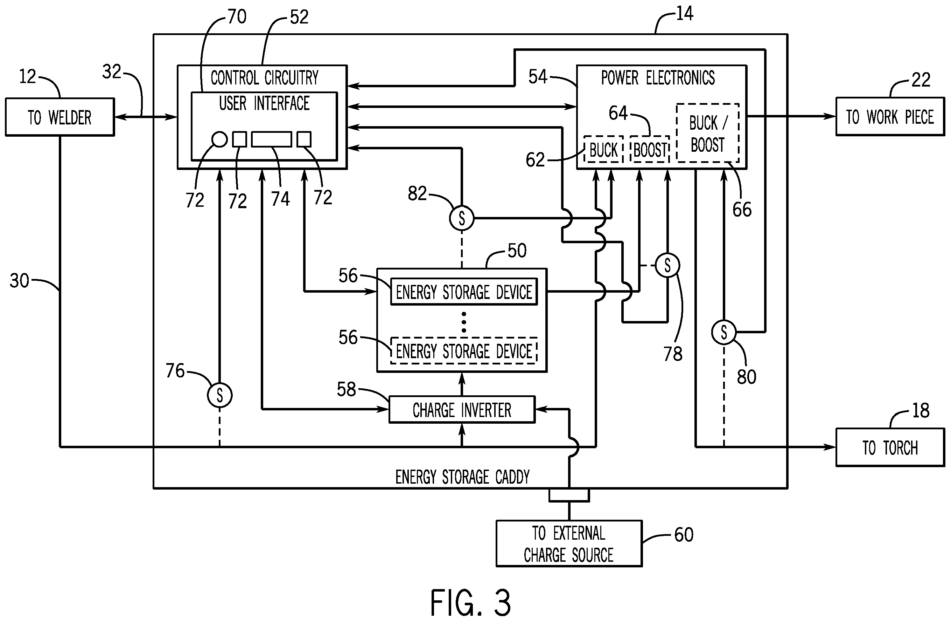

FIG. 3 is a block diagram of an embodiment of the energy storage caddy 14, illustrating various components of the energy storage caddy 14. As discussed above, the energy storage caddy 14 is configured to provide power to the welding torch 18 of the welding system 10 for a welding operation. To that end, the energy storage caddy 14 receives power from the welder 12, supplements the power (e.g., provides additional power) received from the welder 12, conditions the power, and then provides the power to the torch 18. In the manner described in detail below, the energy storage caddy 14 may condition the power based on operating parameters and/or conditions of the welding system 10 (e.g., system feedback or user input), and the energy storage caddy 14 may communicate with the welder 12 to optimize the power supplied by the welder 12, optimize the power supplied by the energy storage caddy 14, and optimize the combined power supplied to the welding torch 18. In the illustrated embodiment, the energy storage caddy 14 includes an energy storage 50, control circuitry 52, and power electronics 54, among other components. The function and operation of these components is described in detail below.

The power supplied by the welder 12 to the energy storage caddy 14 is passed to the torch 18. As discussed below, power stored in the energy storage caddy 14 may be combined with the power supplied by the welder 12 before the combined power is supplied to the torch 18. Specifically, power stored in the energy storage 50 of the energy storage caddy 14 may be combined with the power supplied by the welder 12. In the illustrated embodiment, the energy storage 50 includes an energy storage device 56. The energy storage device 56 may be a battery, a fuel cell, a combination thereof, or any other suitable energy storage device. In the illustrated embodiment, the energy storage 50 includes one energy storage device 56, but other embodiments may include multiple energy storage devices 56. For example, multiple energy storage devices 56 may be coupled to one another in series, in parallel, or in any other suitable configuration.

The energy storage device 56 of the energy storage 50 is charged via power supplied from an external source. In the illustrated embodiment, the energy storage device 56 is charged from power supplied by the welder 12. Specifically, power supplied by the welder 12 is input into a charge inverter 58, which uses the power to charge the energy storage device 56. The charge inverter 58 is shown within the energy storage caddy 14 in the illustrated embodiment, however the charge inverter 58 may also be located external to the caddy 14. Additionally, in certain embodiments, the energy storage device 56 may also be charged directly via another external charge source 60. For example the external charge source 60 may be a power grid, another generator, or other suitable power source. As shown, power from the external charge source 60 is supplied to the charge inverter 58 for charging the external storage device 56. However, in other embodiments, power from the external charge source 60 may be supplied directly to the energy storage device 56 of the energy storage 50.

In operation, the power electronics 54 receives power from the energy storage device 56 and converts the power from the energy storage device 56 into a desired power output (e.g., a power output suitable for use in a welding operation). The power electronics 54 also receives power from the welder 12 (e.g., via weld power cable 30), and the power electronics 54 combines the power received from the energy storage device 56 with the power received from the welder 12. The power electronics 54 may include one or more circuit topologies for use depending on the voltage and/or current of the power supplied by the energy storage device 56 and/or the welder 12, the type of welding process or operation, or other operating conditions and parameters. For example, the power electronics 54 may include a buck converter 62, a boost converter 64, a buck/boost converter 66, any combination thereof, or any other suitable circuit. The power electronics 54 may convert the power received from the energy storage device 56 to be suitable for use with any of a variety of welding processes, such as shield metal arc welding, gas metal arc welding, stick welding, metal inert gas welding, tungsten inert gas welding, plasma welding, multi-process welding, induction welding, an auxiliary device, regulated metal disposition, and so forth. For example, the power electronics 54 may be configured to adjust or modify one or more properties of the power, such as voltage, amperage, waveform, phase, and so forth. As discussed below, the conversion or conditioning of the power by the power electronics 54 may be based on a selected welding process, operating conditions of the welding system 10, feedback from the energy storage caddy 14 and/or the welder 12, other user input, and so forth.

After the power from the energy storage device 56 is conditioned by the power electronics 54, the power electronics 54 combines the power from the energy storage device 56 with the power supplied from the welder 12. Thereafter, the combined power is directed to the torch 18 for use in a welding process or operation. As will be appreciated, the combination of the power supplied by the welder 12 with the power stored in the energy storage device 56 enables an increase in the total power that may be used in the welding system 10. That is, the utilization of the energy storage caddy 14 coupled to the secondary side 16 of the welder 12 enables an increase in total power output available to an operator during a welding process. As a result, loading on a circuit breaker of the utility 24 and or the welder 12 (e.g., loading on the utility power) may be reduced, thereby avoiding tripping of the circuit breaker and interruption of the welding operation. The supplemental power provided by the energy storage caddy 14 may also reduce noise pollution and fuel usage for the welder 12 having the engine 26 and generator 28. As discussed below, the energy storage caddy 14 may also enable more streamlined operation of the welding system 10.

As mentioned above, the energy storage caddy 14 includes control circuitry 52. The control circuitry 52 is configured to regulate operation of one or more components of the energy storage caddy 14. As such, the control circuitry 52 may communicate with one or more components of the energy storage caddy 14 (e.g., the power electronics 54), as well as with other components of the welding system 10 (e.g., the welder 12). For example, the control circuitry 52 may communicate with the welder 12 via the control cable 32. In other embodiments, the control circuitry 52 may communicate with the welder 12 via a wireless connection. The control circuitry 52 may also be configured to communicate with other components of other systems via a network connection, such as a local area network connection or an internet connection. In certain embodiments, the control circuitry 52 may also be configured to regulate operation of the welder 12 or other components of the welding system 10.

The control circuitry 52 includes a user interface 70 that enables user input of information. In the illustrated embodiment, the user interface 70 includes a display 72 and a variety of input controls 74 (e.g., switches, knobs, etc.). The user interface 70 may be used by an operator to control, adjust, and/or select a variety of operating parameters and/or conditions of the welding system 10. For example, the user interface 70 (e.g., the input controls 74) may be used to select a desired welding process, a welding parameter setting (e.g., desired total current output of the welding system 10), a breaker size of the utility 24 or welder 12, the length 34 of the weld power cable 30, and so forth. The display 72 may be used to display selections made by the operator using the interface 70, feedback information from the energy storage caddy 14, or other information. In certain embodiments, the user interface 70 may be a component separate from the energy storage caddy 14. For example, the user interface 70 may be a remote control.

Control of the energy storage caddy 14 and/or the welder 12 by the control circuitry 52 may be based on measured feedback of one or more operating parameters or conditions of the welding system 10. In the illustrated embodiment, the energy storage caddy 14 includes a variety of sensors configured to measure and/or detect operating conditions of the energy storage caddy 14. For example, a first sensor 76 of the energy storage caddy 14 is configured to detect or measure an operating parameter of the power received by the energy storage caddy 14 from the welder 12. The first sensor 76 may measure a current, voltage, or other parameter of the power from the welder 12. Additionally, or alternatively, the control circuitry 52 may received measured operating parameter feedback related to the power provided by the welder 12 from the welder 12 itself (e.g., via the control cable 32).

A second sensor 78 of the energy storage caddy 14 is configured to detect or measure an operating parameter of the power supplied by the energy storage 50. For example, the sensor 78 may measure a current, voltage, or other parameter of the power supplied by the energy storage 50. Similarly, a third sensor 80 is configured to measure a parameter of the combined output power of the energy storage caddy 14. More specifically, the third sensor 80 measures a parameter of the combined power from the energy storage 50 and the welder 12. In other words, the third sensor 80 measures a parameter of the power supplied to the welding operation (e.g., the torch 18).

The energy storage caddy 14 may further include additional sensors configured to measure other operating parameters of the energy storage caddy 14. In the illustrated embodiment, a fourth sensor 82 of the energy storage caddy 14 may be used to measure an operating parameter of the energy storage 50 (e.g., the energy storage device 56). For example, the fourth sensor 82 may measure an amount (e.g., a percentage) of charge of the energy storage device 56.

As mentioned above, the energy storage caddy 14 is configured to regulate, coordinate, and synchronize operation of the energy storage caddy 14 and the welder 12 based on measured feedback (e.g., from sensors 76, 78, 80, 82), user input information or selections, operating conditions of the welding system, and so forth. For example, in one embodiment, an operator may use the user interface 70 to select a desired welding process (e.g., stick welding), select a desired total current output of the welding system 10 for the desired welding process, and a select a breaker size of the welder 12 or the utility 24. In response, the control circuitry 52 coordinates operation of the welder 12 and the energy storage caddy 14 to optimize operation of the welder 12 and the energy storage caddy 14 based in the user input information. For example, the control circuitry 52 may regulate the welder 12 such that the welder 12 produces a first level of output power (i.e., provided to the energy storage caddy 14), and the control circuitry 52 may regulate the energy storage caddy 14 (e.g., the energy storage 50 and the power electronics 54) such that the energy storage caddy 14 produces a second level of output power. The first and second levels of output power may be combined to produce the desired total current output selected by the user. Furthermore, as the charge of the energy storage device 56 (e.g., measured by sensor 82) reduces, the control circuitry 52 may regulate operation of the welder 12 such that the welder 12 produces an increased amount of power to account for a reduction in power production of the energy storage caddy 14. On the other hand, when the energy storage device 56 is at or near a full charge, the control circuitry 52 may control the welder 12 to be in a low idle or sleep mode, while still providing the desired total current output for the welding operation. This optimization in operation of the energy storage caddy 14 and the welder 12 may reduce fuel usage of the welder 12, reduce noise pollution produced by the welder 12, reduce breaker tripping, increase overall total power output of the welding system 10, and so forth.

The control circuitry 52 may also be configured to optimize operation of the welding system 10 in other manners. For example, at the beginning of a welding operation, the welder 12 may be turned off or in a sleep mode. In such circumstances, the energy storage caddy 14 may readily supply a current output (e.g., from the energy storage 50) suitable for beginning a welding operation (e.g., striking an arc with the torch 18). As the energy storage caddy 14 supplies sufficient power to begin the welding operation, the control circuitry 52 may simultaneously send a control signal to the welder 12 to turn on or come out of sleep mode. Thereafter, the welder 12 may begin generating and supplying power to the energy storage caddy 14 for use in the welding operation. In this manner, operation of the welding system 10 may be more streamlined and efficient.

Similarly, in certain circumstances, the control circuitry 52 may be configured to turn off or interrupt operation of the welder 12. For example, for portions of certain waveforms, the caddy 14 may shut off or interrupt the welder 12 and provide power to the welding operation from only the energy storage 50. As will be appreciated, for applications such as plasma welding and regulated metal deposition, long lengths 34 of the weld power cable 30 (e.g., high weld cable inductance) may complicate operation of the welding system 10. As such, the control circuitry 52 may temporarily shut off or interrupt the welder 12 and provide power to the welding operation from only the energy storage 50. This operation enables the welding system 10 to readily and quickly provide a desired current output to the welding operation from a power source (i.e., the energy storage caddy 14) nearby the welding operation, which is not managed by long leads and cables (e.g., the weld power cable 30).

As will be appreciated, the energy storage caddy 14 may be used in other circumstances and operation conditions as well. For example, the energy storage caddy 14 may be capable of providing sufficient power for a welding operation without being coupled to the secondary side 16 of the welder 12. Additionally, in certain embodiments, the energy storage caddy 14 may be configured to supply a background power or voltage (e.g., to maintain a readily available output power) based on a selected welding operation or process. Indeed, the features of the energy storage caddy 14 described above may be used in any combination with one another to enable functionality of the energy storage caddy 14 to provide a variety of different output powers (e.g., alternating current, direct current, etc.) for a variety of different welding process and operations (e.g., stick, MIG, plasma, etc.) in a variety of different operating conditions.

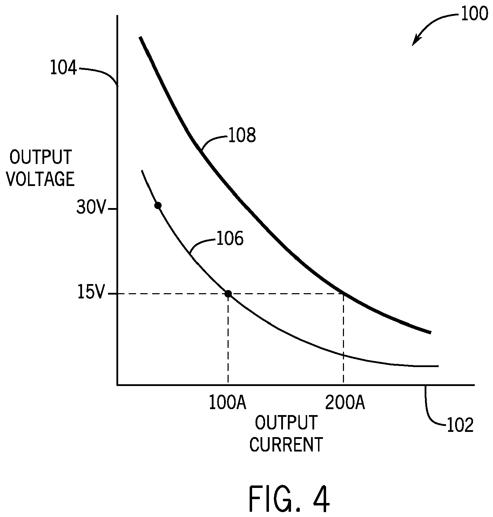

FIG. 4 is a graph 100 illustrating a total power output of the welding system 10 without the energy storage caddy 14 and a total power output of the welding system 10 with the energy storage caddy 14 coupled to the secondary side 16 of the welder 12. An X-axis 102 of the graph 100 represents output current of the welding system 10, and a Y-axis 104 of the graph 100 represents output voltage of the welding system 10. Additionally, line 106 of the graph 100 represents a total power output of the welding system 10 without the energy storage caddy 14. Line 108 represents a total power output of the welding system 10 with the energy storage caddy coupled to the secondary side 16 of the welder 12.

As shown by the graph 100, the total power output of the welding system 10 with the energy storage caddy 14 (i.e., line 108) coupled to the secondary side 16 of the welder 12 is greater than the total power output of the welding system 10 without the energy storage caddy 14 (i.e., line 106). As discussed in detail above, the energy storage 50 of the energy storage caddy 14 may store and discharge power that is combined with a power supplied by the welder 12. Thereafter, the combined power from the energy storage caddy 14 and the welder 12 may be supplied to a welding operation (e.g., the welding torch 18).

As discussed in detail above, embodiments of the present disclosure are directed towards the welding system 10 having the energy storage caddy 14 with one or more energy storage devices 56 running on a secondary connection (e.g., secondary side 16) of the welder 12 or welding power supply. The energy storage caddy 14 may regulate, coordinate, and synchronize operation of the welder 12 and the energy storage caddy 14 to improve efficiency, performance, and versatility of the welding system 10. For example, in certain embodiments, the energy storage caddy 14 may be used to offset or add to an output power or current supplied by the welder 12, thereby increasing the overall power or current output of the welding system 10 while reducing loading on a breaker of the welder 12), reducing noise and fuel usage of the welder 12, and so forth. The energy storage caddy 14 may enable additional improvements to the functionality of the welding system 10. For example, the energy storage caddy 14 may enable the initiation of a welding process or operation while the welder 12 is turned off or in a sleep mode, while the energy storage caddy 14 also controls the welder 12 to turn on or come out of the sleep mode. In this manner, the energy storage caddy 14 enables a more streamlined and efficient operation of the welding system 10.

## Claims

1. A welding system (10), comprising:
- a welder (12) connectible at a primary side of the welder (12) to a utility power source (24) and configured to supply a secondary power output; and
- an energy storage caddy (14) comprising:
- an energy storage device (56) configured to provide a supplemental power output;
**characterized in that**
the energy storage caddy (14) is separate from the welder (12) and coupled to a secondary side (16) of the welder (12) by a weld power cable (30) and a control cable (32), and configured to receive the secondary power output from the welder (12), wherein the energy storage caddy (14) further comprises control circuitry (52) configured to synchronize operation of the welder (12) and the energy storage caddy (14) based on at least one operating parameter of the welding system (10), wherein the energy storage caddy (14) is configured to combine the secondary power output and the supplemental power output to produce a total power output, and output the total power output to a welding operation.

2. The welding system (10) of claim 1,
wherein the at least one operating parameter comprises a user input selection, a measured operating parameter of the welding system (10), or both.

3. The welding system (10) of claim 2,
wherein the user input selection comprises a desired value of the total power output, a size of a breaker of the welder (12), a type of welding operation, or any combination thereof.

4. The welding system (10) of claim 2 or 3,
wherein the measured operating parameter of the welding system (10) comprises a measured voltage or current of the secondary power output, a measured voltage or current of the supplemental power output, a measured voltage or current of the total power output, a measured charge of the energy storage device (56), or any combination thereof.

5. The welding system (10) of one of the preceding claims,
wherein the energy storage caddy (14) comprises at least one sensor (76, 78, 80) configured to measure the at least one operating parameter of the welding system (10).

6. The welding system (10) of one of the preceding claims,
wherein the energy storage caddy (14) comprises power electronics (54) configured to condition the supplemental power output based on the at least one operating parameter before combining the supplemental power output with the secondary power output.

7. The welding system (10) of claim 6, wherein the power electronics (54) comprises a buck converter (62), a boost converter (64), a buck/boost converter (66), or any combination thereof.

8. The welding system (10) of one of the preceding claims, wherein the control circuitry (52) comprises a user interface (70) configured to enable user input selection of the at least one operating parameter.

9. The welding system (10) of one of the preceding claims, wherein the energy storage caddy (14) comprises a charger configured to charge the energy storage device (56) with the secondary power output.

10. A method, comprising:
- providing a first power output with a welder (12) which is connected at a primary side of the welder (12) to a utility power source (24);
- providing a second power output with an energy storage device (56) of an energy storage caddy (14) coupled to a secondary side (16) of the welder (12);
- combining the first power output and the second power output with the energy storage caddy (14) to produce a total power output; and
- supplying the total power output to a welding operation, synchronizing operation of the welder (12) and the energy storage caddy (14) with control circuitry (52) of the energy storage caddy (14) based on a measured operating parameter or a user input selection, wherein the energy storage caddy (14) is separate from the welder (12) and coupled to a secondary side (16) of the welder (12) by a weld power cable and a control cable, and configured to receive the secondary power output from the welder (12).

11. The method of claim 10,
comprising adjusting operation of the welder (12) to adjust a value of the first power output and adjusting operation of the energy storage device (56) to adjust a value of the second power output to achieve a user input desired value of the total power output with control circuitry (52) of the energy storage device (56).

12. The method of claim 10 or 11,
comprising conditioning the second power output based on a measured operating parameter or a user input selection with power electronics (54) of the energy storage caddy (14) before combining the second power output with the first power output, wherein the power electronics (54) comprises a buck converter (62), a boost converter (64), a buck/boost converter (66), or any combination thereof.

13. The method of one of claims 10 to 12,
comprising charging the energy storage device (56) with the first power output.

14. The method of one of claims 10 to 13,
comprising charging the energy storage device (56) with an external power source (60).

15. The method of one of claims 10 to 14,
comprising initiating the welding operation with only the second power output while the welder (12) is off or in a sleep mode.

## Patentansprüche

1. Schweißsystem (10), das Folgendes umfasst:
- eine Schweißeinrichtung (12), die auf einer primären Seite der Schweißeinrichtung (12) mit einer Leistungsquelle (24) eines Versorgungsunternehmens verbunden werden kann und konfiguriert ist, einen sekundären Leistungsausgang versorgen; und
- einen Energiespeicherbehälter (14), der konfiguriert ist, einen ergänzenden Leistungsausgang bereitzustellen;
**dadurch gekennzeichnet, dass**
der Energiespeicherbehälter (14) von der Schweißeinrichtung (12) getrennt und durch ein Schweißenergiekabel (30) und ein Steuerkabel (32) mit einer sekundären Seite (16) der Schweißeinrichtung (12) gekoppelt ist und konfiguriert ist, den sekundären Leistungsausgang von der Schweißeinrichtung (12) zu empfangen, wobei der Energiespeicherbehälter (14) ferner eine Steuerschaltungsanordnung (52) umfasst, die konfiguriert ist, den Betrieb der Schweißeinrichtung (12) und des Energiespeicherbehälters (14) auf der Grundlage mindestens eines Betriebsparameters des Schweißsystems (10) zu synchronisieren, wobei der Energiespeicherbehälter (14) konfiguriert ist, den sekundären Leistungsausgang und den ergänzenden Leistungsausgang zu kombinieren, um einen Gesamtleistungsausgang zu erzeugen und den Gesamtleistungsausgang an einen Schweißvorgang auszugeben.

2. Schweißsystem (10) nach Anspruch 1,
wobei der mindestens eine Betriebsparameter eine Anwendereingabeauswahl, einen gemessenen Betriebsparameter des Schweißsystems (10) oder beides umfasst.

3. Schweißsystem (10) nach Anspruch 2,
wobei die Anwendereingabeauswahl einen gewünschten Wert des Gesamtleistungsausgangs, eine Größe eines Unterbrechers der Schweißeinrichtung (12), eine Art des Schweißbetriebs oder eine beliebige Kombination davon umfasst.

4. Schweißsystem (10) nach Anspruch 2 oder 3,
wobei der gemessene Betriebsparameter des Schweißsystems (10) eine gemessene Spannung oder einen gemessenen Strom des sekundären Leistungsausgangs, eine gemessene Spannung oder einen gemessenen Strom des ergänzenden Leistungsausgangs, eine gemessene Spannung oder einen gemessenen Strom des Gesamtleistungsausgangs, eine gemessene Ladung der Energiespeichervorrichtung (56) oder eine beliebige Kombination davon umfasst.

5. Schweißsystem (10) nach einem der vorhergehenden Ansprüche,
wobei der Energiespeicherbehälter (14) mindestens einen Sensor (76, 78, 80) umfasst, der konfiguriert ist, den mindestens einen Betriebsparameter des Schweißsystems (10) zu messen.

6. Schweißsystem (10) nach einem der vorhergehenden Ansprüche,
wobei der Energiespeicherbehälter (14) Leistungselektronik (54) umfasst, die konfiguriert ist, den ergänzenden Leistungsausgang auf der Grundlage des mindestens einen Betriebsparameters anzupassen, bevor der ergänzende Leistungsausgang mit dem sekundären Leistungsausgang kombiniert wird.

7. Schweißsystem (10) nach Anspruch 6, wobei die Leistungselektronik (54) einen Tiefsetzsteller-Umsetzer (62), einen Hochsetzsteller-Umsetzer (64), einen Tiefsetzsteller/Hochsetzsteller-Umsetzer (66) oder eine beliebige Kombination davon umfasst.

8. Schweißsystem (10) nach einem der vorhergehenden Ansprüche, wobei die Steuerschaltungsanordnung (52) eine Anwenderschnittstelle (70) umfasst, die konfiguriert ist, die Anwendereingabeauswahl des mindestens einen Betriebsparameters zu ermöglichen.

9. Schweißsystem (10) nach einem der vorhergehenden Ansprüche, wobei der Energiespeicherbehälter (14) eine Ladeeinrichtung umfasst, die konfiguriert ist, die Energiespeichervorrichtung (56) mit dem sekundären Leistungsausgang aufzuladen.

10. Verfahren, das Folgendes umfasst:
- Bereitstellen eines ersten Leistungsausgangs mit einer Schweißeinrichtung (12), die auf einer primären Seite der Schweißeinrichtung (12) mit einer Leistungsquelle (24) eines Versorgungsunternehmens verbunden ist;
- Bereitstellen eines zweiten Leistungsausgangs mit einer Energiespeichervorrichtung (56) eines Energiespeicherbehälters (14), der mit einer sekundären Seite (16) der Schweißeinrichtung (12) gekoppelt ist;
- Kombinieren des ersten Leistungsausgangs und des zweiten Leistungsausgangs mit dem Energiespeicherbehälter (14), um einen Gesamtleistungsausgang zu erzeugen; und
- Zuführen des Gesamtleistungsausgangs zu einem Schweißvorgang, Synchronisieren des Betriebs der Schweißeinrichtung (12) und des Energiespeicherbehälters (14) mit einer Steuerschaltungsanordnung (52) des Energiespeicherbehälters (14) auf der Grundlage eines gemessenen Betriebsparameters oder einer Anwendereingabeauswahl, wobei der Energiespeicherbehälter (14) von der Schweißeinrichtung (12) getrennt und durch ein Schweißenergiekabel und ein Steuerkabel mit einer sekundären Seite (16) der Schweißeinrichtung (12) gekoppelt ist und konfiguriert ist, den sekundären Leistungsausgang von der Schweißeinrichtung (12) zu empfangen.

11. Verfahren nach Anspruch 10,
das einen Einstellvorgang der Schweißeinrichtung (12), um einen Wert des ersten Leistungsausgangs einzustellen, und einen Einstellvorgang der Energiespeichervorrichtung (56), um einen Wert des zweiten Leistungsausgangs einzustellen, um einen von einem Anwender eingegebenen gewünschten Wert des Gesamtleistungsausgangs zu erzielen, mittels der Steuerschaltungsanordnung (52) der Energiespeichervorrichtung (56) umfasst.

12. Verfahren nach Anspruch 10 oder 11,
das das Anpassen des zweiten Leistungsausgangs auf der Grundlage eines gemessenen Betriebsparameters oder einer Anwendereingabeauswahl mit Leistungselektronik (54) des Energiespeicherbehälters (14) vor dem Kombinieren des zweiten Leistungsausgangs mit dem ersten Leistungsausgang umfasst, wobei die Leistungselektronik (54) einen Tiefsetzsteller-Umsetzer (62), einen Hochsetzsteller-Umsetzer (64), einen Tiefsetzsteller/Hochsetzsteller-Umsetzer (66) oder eine beliebige Kombination davon umfasst.

13. Verfahren nach einem der Ansprüche 10 bis 12,
das das Aufladen der Energiespeichervorrichtung (56) mit dem ersten Leistungsausgang umfasst.

14. Verfahren nach einem der Ansprüche 10 bis 13,
das das Aufladen der Energiespeichervorrichtung (56) mit einer externen Leistungsquelle (60) umfasst.

15. Verfahren nach einem der Ansprüche 10 bis 14,
das das Auslösen des Schweißbetriebs mit lediglich dem zweiten Leistungsausgang, während die Schweißeinrichtung (12) ausgeschaltet ist oder sich in einem Ruhemodus befindet, umfasst.

## Revendications

1. Système de soudage (10), comprenant :
- une machine à souder (12) pouvant être connectée au niveau d'un côté primaire de la machine à souder (12) à une source d'alimentation électrique (24) et configurée pour fournir une sortie de puissance secondaire ; et
- un chariot de stockage d'énergie (14) comprenant :
- un dispositif de stockage d'énergie (56) configuré pour fournir une sortie de puissance supplémentaire ;
**caractérisé en ce que**
le chariot de stockage d'énergie (14) est séparé de la machine à souder (12) et couplé à un côté secondaire (16) de la machine à souder (12) par un câble électrique de soudage (30) et un câble de commande (32), et configuré pour recevoir la sortie de puissance secondaire de la machine à souder (12), le chariot de stockage d'énergie (14) comprenant en outre des circuits de commande (52) configurés pour synchroniser le fonctionnement de la machine à souder (12) et du chariot de stockage d'énergie (14) sur la base d'au moins un paramètre opérationnel du système de soudage (10), le chariot de stockage d'énergie (14) étant configuré pour combiner la sortie de puissance secondaire et la sortie de puissance supplémentaire pour produire une sortie de puissance totale, et produire en sortie la sortie de puissance totale pour une opération de soudage.

2. Système de soudage (10) selon la revendication 1, dans lequel l'au moins un paramètre opérationnel comprend une sélection d'entrée d'utilisateur, un paramètre opérationnel mesuré du système de soudage (10), ou les deux.

3. Système de soudage (10) selon la revendication 2, dans lequel la sélection d'entrée d'utilisateur comprend une valeur souhaitée de la sortie de puissance totale, une taille d'un rupteur de la machine à souder (12), un type d'opération de soudage, ou n'importe quelle combinaison de ceux-ci.

4. Système de soudage (10) selon la revendication 2 ou 3, dans lequel le paramètre opérationnel mesuré du système de soudage (10) comprend une tension ou un courant mesuré de la sortie de puissance secondaire, une tension ou un courant mesuré de la sortie de puissance supplémentaire, une tension ou un courant mesuré de la sortie de puissance totale, une charge mesurée du dispositif de stockage d'énergie (56), ou n'importe quelle combinaison de ceux-ci.

5. Système de soudage (10) selon l'une quelconque des revendications précédentes, dans lequel le chariot de stockage d'énergie (14) comprend au moins un capteur (76, 78, 80) configuré pour mesurer l'au moins un paramètre opérationnel du système de soudage (10).

6. Système de soudage (10) selon l'une quelconque des revendications précédentes, dans lequel le chariot de stockage d'énergie (14) comprend des circuits électroniques de puissance (54) configurés pour conditionner la sortie de puissance supplémentaire sur la base de l'au moins un paramètre opérationnel avant de combiner la sortie de puissance supplémentaire à la sortie de puissance secondaire.

7. Système de soudage (10) selon la revendication 6, dans lequel les circuits électroniques de puissance (54) comprennent un convertisseur abaisseur (62), un convertisseur élévateur (64), un convertisseur abaisseur/élévateur (66), ou n'importe quelle combinaison de ceux-ci.

8. Système de soudage (10) selon l'une quelconque des revendications précédentes, dans lequel les circuits de commande (52) comprennent une interface utilisateur (70) configurée pour permettre une sélection d'entrée d'utilisateur de l'au moins un paramètre opérationnel.

9. Système de soudage (10) selon l'une quelconque des revendications précédentes, dans lequel le chariot de stockage d'énergie (14) comprend un chargeur configuré pour charger le dispositif de stockage d'énergie (56) avec la sortie de puissance secondaire.

10. Procédé, comprenant :
- la fourniture d'une première sortie de puissance avec une machine à souder (12) qui est connectée au niveau d'un côté primaire de la machine à souder (12) à une source d'alimentation électrique (24) ;
- la fourniture d'une seconde sortie de puissance avec un dispositif de stockage d'énergie (56) d'un chariot de stockage d'énergie (14) couplé à un côté secondaire (16) de la machine à souder (12) ;
- la combinaison de la première sortie de puissance et de la seconde sortie de puissance avec le chariot de stockage d'énergie (14) pour produire une sortie de puissance totale ; et
- l'alimentation de la sortie de puissance totale pour une opération de soudage, en synchronisant le fonctionnement de la machine à souder (12) et du chariot de stockage d'énergie (14) avec des circuits de commande (52) du chariot de stockage d'énergie (14) sur la base d'un paramètre opérationnel mesuré ou d'une sélection d'entrée d'utilisateur, le chariot de stockage d'énergie (14) étant séparé du machine à souder (12) et couplé à un côté secondaire (16) de la machine à souder (12) par un câble électrique de soudage et un câble de commande, et configuré pour recevoir la sortie de puissance secondaire depuis la machine à souder (12).

11. Procédé selon la revendication 10, comprenant l'ajustement du fonctionnement de la machine à souder (12) pour ajuster une valeur de la première sortie de puissance et ajuster le fonctionnement du dispositif de stockage d'énergie (56) pour ajuster une valeur de la seconde sortie de puissance afin de parvenir à une valeur souhaitée d'entrée d'utilisateur de la sortie de puissance totale avec des circuits de commande (52) du dispositif de stockage d'énergie (56).

12. Procédé selon la revendication 10 ou 11, comprenant le conditionnement de la seconde sortie de puissance sur la base d'un paramètre opérationnel mesuré ou d'une sélection d'entrée d'utilisateur avec des circuits électroniques (54) du chariot de stockage d'énergie (14) avant la combinaison de la seconde sortie de puissance avec la première sortie de puissance, dans lequel les circuits électroniques de puissance (54) comprennent un convertisseur abaisseur (62), un convertisseur élévateur (64), un convertisseur abaisseur/élévateur (66), ou n'importe quelle combinaison de ceux-ci.

13. Procédé selon l'une des revendications 10 à 12, comprenant la charge du dispositif de stockage d'énergie (56) avec la première sortie de puissance.

14. Procédé selon l'une des revendications 10 à 13, comprenant la charge du dispositif de stockage d'énergie (56) avec une source de puissance externe (60).

15. Procédé selon l'une des revendications 10 à 14, comprenant le lancement de l'opération de soudage uniquement avec la seconde sortie de puissance pendant que la machine à souder (12) est arrêtée ou en mode de veille.
